# EUROPÄISCHE PATENTSCHRIFT

(11) **EP 0 415 888 B1**
(45) Veröffentlichungstag und Bekanntmachung des Hinweises auf die Patenterteilung: **01.06.1994**
(21) Anmeldenummer: 90810638.8
(22) Anmeldetag: 22.08.1990
(51) Int. Cl.: G03B 27/73

(54) **Photoelektrischer Abtaster**
Photoelectric scanner
Dispositif de balayage photoélectrique

(30) Priorität: 01.09.1989 CH 3171/89
(43) Veröffentlichungstag der Anmeldung: 06.03.1991
(73) Patentinhaber: GRETAG IMAGING AG, CH-8105 Regensdorf (CH)
(72) Erfinder: Frick, Beat, Dr., CH-8107 Buchs (CH)
(74) Vertreter: Kleewein, Walter, Dr.

(56) Entgegenhaltungen:
- DE-A- 2 445 831
- DE-A- 2 459 456
- US-A- 3 677 641

## Beschreibung

Die Erfindung betrifft einen photoelektrischen Abtaster gemäss Oberbegriff der Patentansprüche 1 oder 4 sowie eine Vorrichtung zum Kopieren nach Patentanspruch 9.

Derartige Abtaster ermöglichen eine automatische Analyse der Farbzusammensetzung insbesondere von Kopiervorlagen. Ein solcher Abtaster ist beispielsweise aus der DE-A-24 59 456 der Anmelderin bekannt. Bei dem dort beschriebenen Abtaster wird das von einer Lichtquelle kommende Abtastlicht durch Reflexion an den Spiegelflächen eines motorgetriebenen Spiegelrades quer zur Längsrichtung eines abzutastenden Films (Kopiervorlage) über den Film geführt.

Ein anderer Abtaster ist aus der US-A-3,677,641 bekannt. Bei dem dort beschriebenen Abtaster wird die Kopiervorlage in Form eines Films vom Licht einer Lichtquelle beleuchtet. Im weiteren Verlauf des Strahlenganges tritt das durch den Film durchgetretene Abtastlicht durch eine rotierbare Trommel hindurch, in deren Mitte ein Spiegel angeordnet ist, und die in ihrer Aussenwand Oeffnungen aufweist. Durch das Zusammenwirken des Spiegels und der Trommelöffnungen werden die Detektoren, die das durch die Trommel hindurchgetretene Abtastlicht empfangen, abgefragt.

Ein weiterer Abtaster ist aus der DE-A-24 45 831 bekannt. Bei dem dort beschriebenen Abtaster fällt das von einer Lichtquelle kommende Abtastlicht auf die Kopiervorlage, beispielsweise in Form eines Films. Jenseits des Films ist eine Spaltblende vorgesehen, die einen schmalen Spalt in Richtung quer zur Längsrichtung des Films aufweist. An diese Spaltblende schliesst sich eine rotierende Schlitzscheibe an, deren Schlitze im wesentlichen radial verlaufen. Alternativ kann diese Blende anstelle der Schlitze auch mit Löchern versehen sein. Kommt ein solcher Schlitz bzw. ein solches Loch mit dem Spalt der Spaltblende zur Ueberlagerung, so wird ein Ausschnitt des Abtastlichts durchgelassen und von einer Photozelle detektiert.

Von solchen Abtastern wird beispielsweise in Hochleistungsprintern Gebrauch gemacht. Bei einem dort eingesetzten weiteren bekannten Abtaster wirft eine Lichtquelle ein Lichtbündel auf eine kreisförmige Scheibe, die in geringem Abstand parallel zur Ebene der Kopiervorlage rotiert und die Oeffnungen aufweist, um einen abzutastenden Punkt auf der Kopiervorlage festzulegen. Das von der Kopiervorlage kommende Licht wird von einer Detektionseinheit aufgenommen.

Die Tendenz geht bei der Abtastung von Kopiervorlagen hin zu immer höherer Auflösung. Dazu sind immer kleinere und immer mehr Abtastpunkte pro Kopiervorlage erforderlich, was in verschiedener Weise erhöhte Leistungsfähigkeit der Detektoren und auch der Auswertelektronik erfordert. Zum Einen muss die Abtastzeit pro Punkt möglichst kurz sein, da die Anzahl der Punkte pro Kopiervorlage bei höherer Auflösung grösser ist, zum Anderen muss die minimal detektierbare Lichtleistung geringer sein, da bei gleicher Lichtintensität im Abtastpunkt, aber kleineren Abmessungen dieses Punktes, die auf den Detektor auftreffende Lichtleistung entsprechend geringer ist. Alle oben erwähnten Abtaster weisen den Nachteil auf, dass eine Verkleinerung der Abmessungen des Abtastpunktes stets mit einem Verlust an Lichtleistung, die auf den Detektor auftrifft, verbunden ist. Dadurch wird die Detektion des Abtastlichts erheblich erschwert.

Ausgehend davon ist es die Aufgabe der Erfindung, bei kleineren Abmessungen des Abtastpunktes die Intensität in diesem Punkt zu erhöhen, um am Empfangsort eine grössereStrahlungsleistung zu erhalten und damit die Detektion zu vereinfachen.

Diese Aufgabe wird erfindungsgemäss durch die in Patentansprüchen 1 oder 4 angeführte Lehre gelöst. Indem durch Fokussierung die Intensität im Abtastpunkt wesentlich vergrössert wird, kann trotz Verkleinerung des Abtastpunktes die Lichtleistung am Detektor in voller Grösse aufrechterhalten oder sogar erhöht werden, wodurch die Detektion des von kleineren Abtastpunkten kommenden Lichts erheblich vereinfacht wird und höhere Auflösungen erzielt werden können.

Im folgenden wird die Erfindung anhand der Zeichnung näher erläutert; es zeigen:
- Fig. 1: eine Kopiervorrichtung gemäss Stand der Technik in schematischer Darstellung,
- Fig. 2: ein erstes Ausführungsbeispiel der erfindungsgemässen Abtastvorrichtung in perspektiv-schematischer Darstellung,
- Fig. 3: ein Detail der Fig. 2 im Axialschnitt,
- Fig. 4: eine von einer Abtastvorrichtung der Fig. 2 abgetastete Vorlage in Aufsicht,
- Fig. 5: eine von einer modifizierten Ausführung (nicht dargestellt) der Abtastvorrichtung der Fig. 2 abgetastete Vorlage in Aufsicht,
- Fig. 6: eine Variante (zweites Ausführungsbeispiel) zu dem in Fig. 3 dargestellten Detail, gleichfalls im Axialschnitt,
- Fig. 7: eine Aufsicht in Richtung der Pfeile VII-VII der Fig. 6 und
- Fig. 8: eine von einer Abtastvorrichtung gemäss Fig. 6 abgetastete Vorlage in Aufsicht.

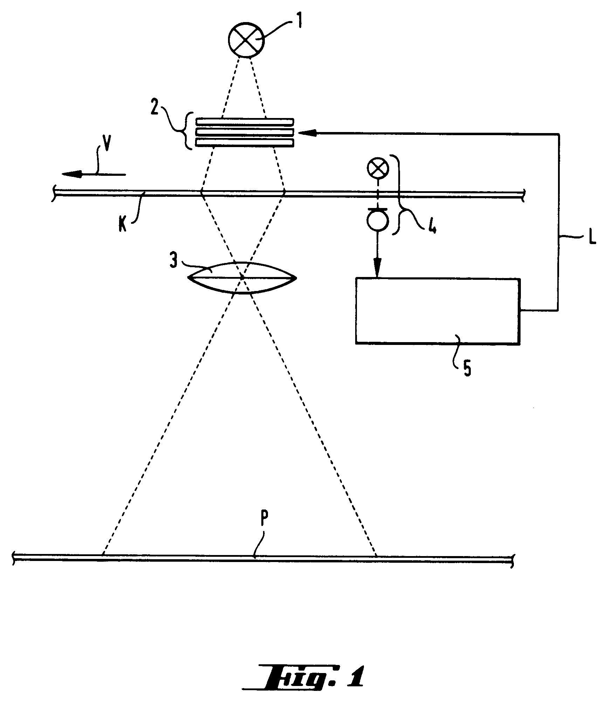

Die in Fig. 1 gezeigte Kopiervorrichtung umfasst eine Kopierlichtquelle 1, einen Satz servogesteuerter Farbverschlüsse 2, eine Abbildungsoptik 3, eine durch eine Messlichtquelle und einen Photoempfänger symbolisch angedeutete photoelektrische Abtastvorrichtung 4 und eine elektronische Belichtungssteuerung 5.

Die mit von der Kopierlichtquelle 1 kommendem Licht beaufschlagte Kopiervorlage in Form eines photographischen Films K wird mittels der Optik 3 auf lichtempfindliches Kopiermaterial P abgebildet, wobei die Kopierlichtmengen für die einzelnen Teilbelichtungen aufgrund einer vorangegangenen bereichsweisen photoelektrischen Ausmessung und Messwertanalyse der Kopiervorlage von der Belichtungssteuerung 5 ermittelt und über die Farbverschlüsse 2 gesteuert werden. (Im folgenden wird das Bezugszeichen K sowohl für Kopiervorlagen im allgemeinen als auch für Filme im besonderen verwendet).

Bei den bekannten Hochleistungs-Printern erfolgt die photoelektrische Ausmessung der Kopiervorlage durch eine Ausmessung vieler kleiner Teilbereiche, beispielsweise mit einer Auflösung von 100 Abtastbereichen (Punkten) je Vorlage. In jedem dieser Bereiche werden mittels geeigneter Messfilter die drei Farbauszugswerte für die Farben Rot, Blau und Grün bestimmt, die näherungsweise den Empfindlichkeiten des Kopiermaterials entsprechen. Diese 3 x ca. 100 Farbauszugswerte (üblicherweise in Form von Farbdichtewerten) werden dann nach verschiedenen Kriterien zur Bestimmung der Kopierlichtmengen ausgewertet.

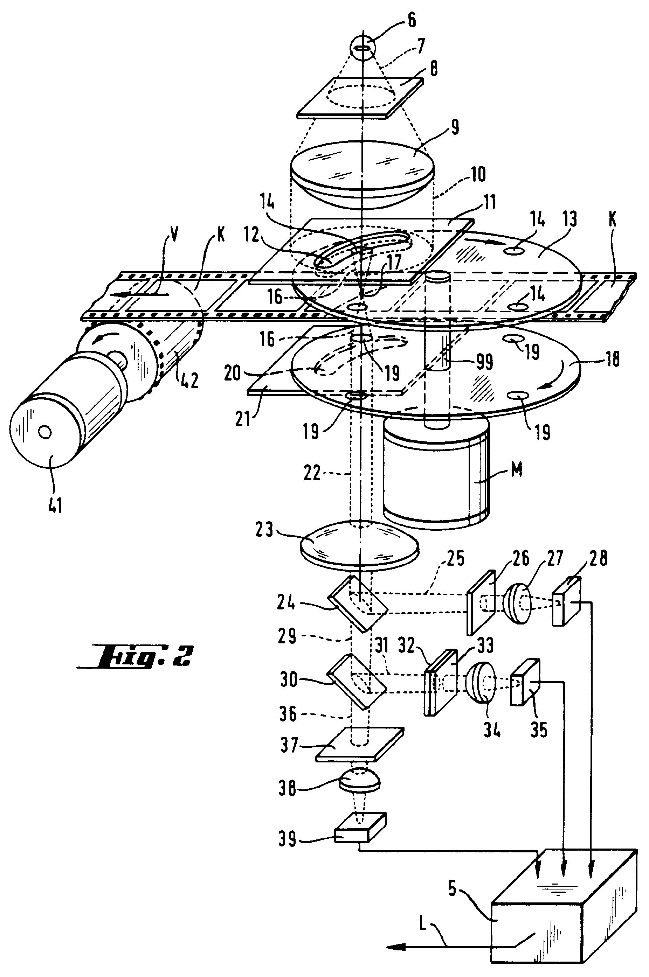

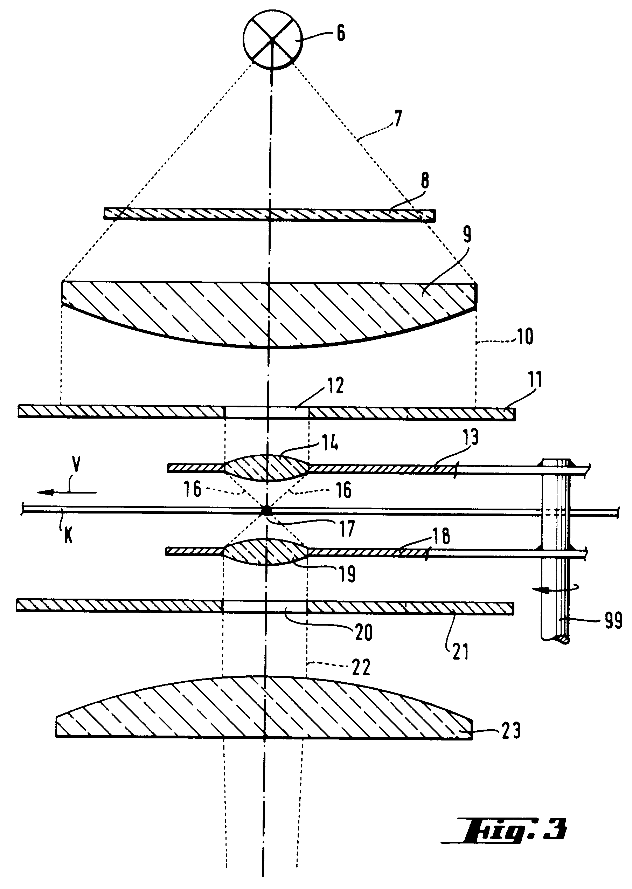

Die Fig. 2 und 3 zeigen ein Ausführungsbeispiel der erfindungsgemässen Abtastvorrichtung, mit der die Farbauszugswerte zur Bestimmung der Kopierlichtmengen gewonnen werden. Eine Messlichtquelle 6 emittiert ein divergierendes Lichtstrahlenbündel 7, das durch ein Wärmeschutzfilter 8 hindurch auf eine konvexe Kondensorlinse 9 auftrifft. Auf diese Weise wird ein zylindrisches Strahlenbündel 10 erzeugt, das auf eine ortsfeste obere Blende 11 auftrifft, welche etwa in ihrer Mitte einen gekrümmten Schlitz 12 aufweist. Unter der Blende 11 ist eine kreisförmige Scheibe 13 angeordnet, die längs ihres Umfangs Oeffnungen aufweist, in denen Linsen 14 befestigt sind. Unter dieser Scheibe 13 befindet sich die Kopiervorlage in Form eines photographischen Films K. Der Film K wird in seinem weiteren Verlauf über eine Transportwalze 42 geführt, welche, von einem Motor 41 angetrieben, den Film K in Vorschubrichtung V transportiert. Spiegelbildlich zur Ebene des Films K ist ist eine zweite kreisförmige Scheibe 18 angeordnet, die ebenfalls Oeffnungen mit Linsen 19 aufweist. Die beiden Scheiben 13 und 18 sitzen auf einer von einem Motor M angetriebenen gemeinsamen Welle 99, wobei ihre Oeffnungen und Linsen 14 bzw. 19 fluchten. Unterhalb der Scheibe 18 ist eine zweite ortsfeste Blende 21 bezüglich der Ebene des Films K symmetrisch zur oberen Blende 11 angeordnet, welche ebenfalls einen gekrümmten Schlitz 20 aufweist. In der weiteren Fortsetzung des Strahlenganges ist eine weitere Kondensorlinse 23 angeordnet.

Das von der Kondensorlinse 9 kommende Strahlenbündel 10 trifft auf die obere Blende 11 auf, wobei ein Teil durch den gekrümmten Schlitz 12, der sich etwa in der Mitte der Blende befindet, ausgeblendet wird. Die in den Oeffnungen der unter der Blende 11 rotierenden Scheibe 13 befestigten Linsen 14 beschreiben eine Bahn, die im Bereich der Blende 11 genau unter dem Schlitz verläuft. Die Breite des Schlitzes 12 ist etwa gleich gross wie der Durchmesser der Linsen. Die Länge des Schlitzes 12 ist etwa gleich gross wie die Breite der Kopiervorlage K. Das auf den Schlitz 12 fallende Licht wird genau dann auf die Kopiervorlage freigegeben, wenn eine Linse 14 durch Rotation der Scheibe 13 unter dem Schlitz 12 erscheint. Das auf jene Linse 14 auftreffende Licht wird von dieser in deren Brennpunkt 17 gebündelt, der sich in der Ebene der Kopiervorlage bzw. des Films K befindet und der der jeweils aktuelle Messpunkt 17 ist.

Das vom Messpunkt 17 kommende Licht (das Strahlenbündel ist durch die Randstrahlen 16 strichliert angedeutet) wird von den Linsen 19, die in den Oeffnungen der synchron zur Scheibe 13 rotierenden Scheibe 18 befestigt sind, wieder parallelisiert, da der Brennpunkt der Linsen 19 mit dem Brennpunkt der jeweils korrespondierenden Linse 14, also mit dem Messpunkt, zusammenfällt. Dieses wieder parallelisierte Strahlenbündel 22 durchdringt den Schlitz 20 der unteren Blende 21, der entsprechend dem Schlitz 12 der oberen Blende 11 genau unter der Bahn der Linsen 19 verläuft und wird durch die Kondensorlinse 23 auf eine Empfangs- und Detektionseinheit fokussiert.

Die Grösse der Linsen im Verhältnis zur Scheibe, sowie die Abmessungen des Spaltes der jeweiligen Blende sind generell aus zeichnerischen Gründen und wegen ihrer besonderen Bedeutung zu gross gezeichnet.

Die Empfangseinheit umfasst drei im wesentlichen gleichartige Empfangs und Detektionsanordnungen, jeweils eine für das Frequenzband des blauen, roten und grünen Lichts, die jeweils ein Absorptionsfilter 26, 32 und 37, eine Detektorlinse 27, 34 und 38, und einen Detektor 28,35 und 39 enthalten. Hinzu kommt für das Frequenzband des roten Lichtes noch ein Wärmeschutzfilter 33, das sich unmittelbar an das Absorptionsfilter 32 anschliesst. Zur Trennung der einzelnen Frequenzbänder enthält diese Empfangs- und Detektionseinheit zwei Interferenzspiegel 24 und 30, die unter einem Winkel von etwa 45° zur Achse des von der Kopiervorlage kommenden Strahlenbündels 22 bzw. des vom ersten Spiegel 24 durchgelassenen Strahlenbündels 29 angeordnet sind.

Dieses von der Kopiervorlage kommende Strahlenbündel 22 trifft auf den ersten Interferenzspiegel 24. Dieser filtert aus dem Spektrum grob das Frequenzband des blauen Lichts 25 heraus, indem er blaues Licht reflektiert und die übrigen Spektralanteile 29 ungehindert passieren lässt. Das grob herausgefilterte blaue Licht 25 beaufschlagt ein Absorptionsfilter 26, das aus dem grob herausgefilterten Frequenzband ein feineres herausfiltert, welches mittels einer Detektorlinse 27 auf den Detektor 28 fokussiert wird. Das vom Spiegel 24 durchgelassene Strahlenbündel 29, welches um das Frequenzband des blauen Lichts verringert ist, trifft auf einen zweiten Interferenzspiegel 30, der aus dem noch übrigen Spektrum grob das Frequenzband des roten Lichtes 31 nach dem gleichen Prinzip wie Spiegel 24 herausfiltert. Dieses, durch Reflexion herausgefilterte rote Licht, beaufschlagt ein zweites Absorptionsfilter 32, das aus dem grob herausgefilterten Frequenzband ein feineres herausfiltert, welches nach Passieren eines Wärmeschutzfilters 33 mittels einer Detektorlinse 34 auf den entsprechenden Detektor 35 abgebildet wird. Das vom Spiegel 30 durchgelassene, jetzt um die Frequenzbänder des blauen und roten Lichts verringerte, Strahlenbündel 36 trifft auf ein drittes Absorptionsfilter 37, das aus dem noch übrigen Spektrum das Frequenzband des grünen Lichtes herausfiltert und mittels einer Detektorlinse 38 auf den entsprechenden Detektor 39 abbildet. Die von den Detektoren 28, 35 und 39 der Empfangseinheit gelieferten Signale werden einer Elektronik 5 zugeführt, die die Signale auswertet.

Für die Funktion des dargestellten Abtasters ist Voraussetzung, dass die Linsen 14 und 19, die in den Oeffnungen der beiden Scheiben 13 und 18 angeordnet sind, stets fluchten. Aus diesem Grund müssen die beiden Scheiben 13 und 18 absolut synchron rotieren. Diese synchrone Bewegung wird dadurch gewährleistet, dass die Scheiben 13 und 18 durch die Welle 99 starr verbunden sind. Diese Welle 99 ist seitlich versetzt neben der Vorlage K angeordnet, um den Transportweg für den Film K in Vorschubrichtung V freizuhalten.

Beim Abtasten eines Films K mit dem Abtaster der Fig. 2 mit seitlich versetzter Antriebswelle 99 ergibt sich ein Abtastschema, wie es aus Fig. 4 ersichtlich ist, welche eine Aufsicht auf ein Stück eines handelsüblichen entwickelten Negativfilmstreifens mit Seitenperforationen 80 zeigt, dessen Bildfelder 81, 82, 83 durch Stege 86 getrennt sind. Ausserdem ist in Fig. 4 auch die seitlich neben dem Film verlaufende Welle 99 angedeutet. Diese Welle 99 ist so neben dem Film positioniert, dass sich die Linsen 14 bzw. 19 längs bogenförmigen Abtastzeilen 87, 87a usw. unter einem Winkel von etwa 45° über den Film hinweg bewegen. Der Abstand zweier Abtastzeilen ist dabei durch die Vorschubgeschwindigkeit des Filmstreifens gegeben, der kontinuierlich fortbewegt wird. Die Auflösung in einzelne Messpunkte 88, 89, 90 usw. längs einer solchen Abtastzeile erfolgt in der Elektronik 5 durch Sampeln. Durch entsprechende Umsortierung der Messpunkte kann ein nahezu quadratisches Messraster gewonnen werden. Da längs einer Abtastzeile 87 Messpunkte 91, 92, 93, usw. entstehen können, die zwei verschiedenen Bildfeldern z.B. 81, 82 oder einem Steg 86 zugeordnet werden müssen, werden zunächst jeweils die zu mindestens drei benachbarten Bildfeldern 81, 82, 83 gehörenden Messpunkte gespeichert. Diese Situation tritt jeweils am Anfang und am Ende eines jeden Bildfeldes auf. Da bei der Erfassung der Messpunkte durch die Elektronik 5 noch keine Zuordnung dieser Messpunkte zu den Bildfeldern erfolgt, müssen daher stets die Messpunkte von mindestens drei benachbarten Bildfeldern gespeichert werden.

Nach der Erfassung der Messpunkte werden diese in der Elektronik 5 zunächst von einem Rechenprogramm den einzelnen Bildfeldern zugeordnet, anschliessend innerhalb der einzelnen Bildfelder umsortiert und dann nach verschiedenen Kriterien ausgewertet. Die so gebildeten Steuersignale werden bildweise über eine Leitung L an die Farbverschlüsse 2 (Fig. 1) zur Steuerung der Kopierlichtmengen übertragen.

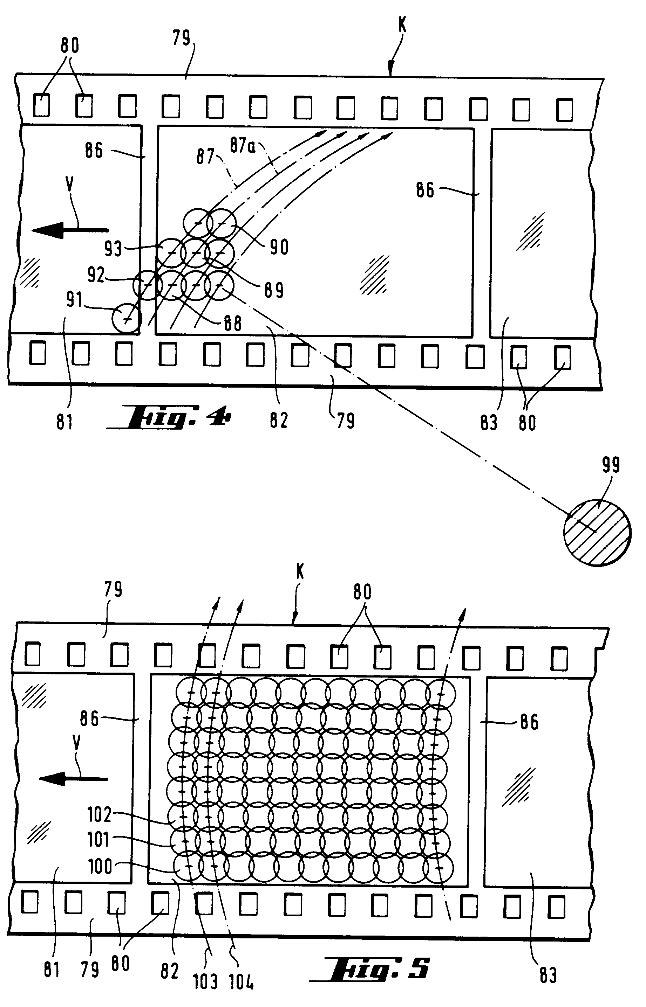

In Fig. 5 ist ein Abtastschema gezeigt, welches sich ergibt, wenn die Rotationsachse der beiden Scheiben 13 und 18 durch die Mittellinie des Films K verläuft. In diesem Fall müssen die beiden Scheiben 13 und 18 elektronisch oder z.B. durch ein Winkelgetriebe mechanisch synchronisiert sein. Bei diesem Abtastschema liegen die Messpunkte 100, 101, 102 usw. längs bogenförmigen Abtastzeilen 103, 104 usw., die die Mittellinie des Films senkrecht schneiden. In diesem Fall ergibt sich direkt (ohne elektronische Umsetzung) ein nahezu quadratisches Raster.

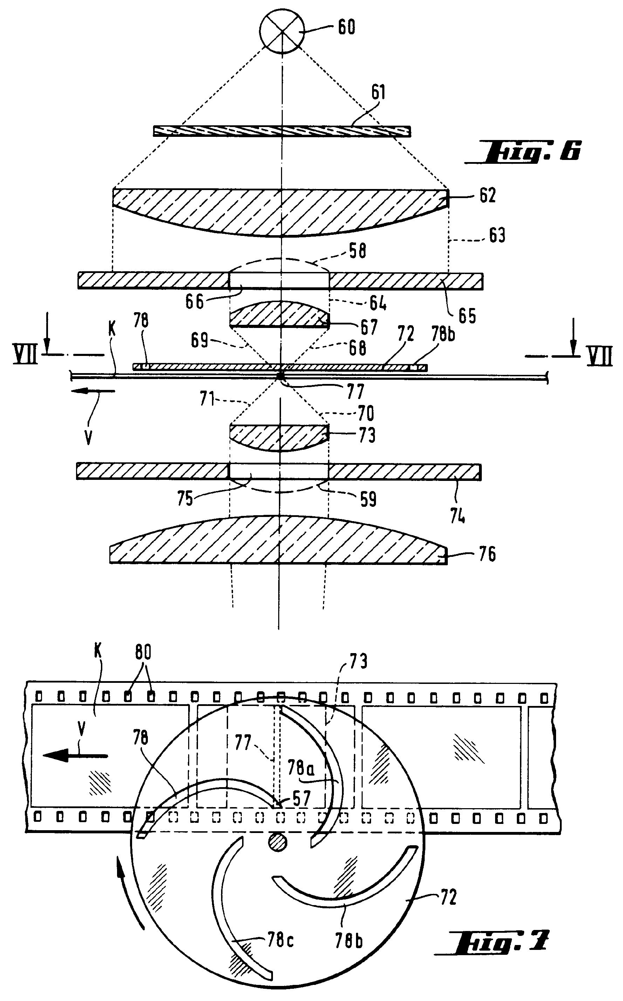

Die in den Fig. 6 und 7 dargestellte Detailvariante enthält wiederum eine Messlichtquelle 60, an die sich ein Wärmeschutzfilter 61 und eine Kondensorlinse 62 zur Erzeugung eines parallelen Strahlenbündels 63 anschliesst. Dieses fällt auf eine ortsfeste obere Schlitzblende 65, unter der eine Zylinderlinse 67 angeordnet ist, deren Breite etwa der Breite des Schlitzes 66 und deren Länge etwa der Länge des Schlitzes 66 und damit etwa der Breite des Films K bzw. der Bildfelder entspricht. Unter dieser Zylinderlinse 67 rotiert in geringem Abstand über der Ebene der Kopiervorlage (Film K) und parallel hierzu eine motorisch rotierbare Scheibe 72, die, wie aus Fig. 7 ersichtlich, vier Oeffnungen 78 aufweist, welche spiralförmig vom Rand der Scheibe zu deren Mittelpunkt verlaufen. Unterhalb der Kopiervorlage (Film K) ist eine zweite Zylinderlinse 73 angeordnet, deren Brennlinie mit der Brennlinie 77 der oberen Zylinderlinse 67 in der Ebene der Kopiervorlage K zusammenfällt. An diese Zylinderlinse 73 schliesst sich eine weitere ortsfeste Schlitzblende 74 an, deren Schlitzbreite etwa der Breite der Zylinderlinse 73 entspricht und deren Schlitzlänge etwa der Länge der Zylinderlinse 73 und damit etwa der Breite der Kopiervorlage K entspricht, sowie eine weitere Kondensorlinse 76.

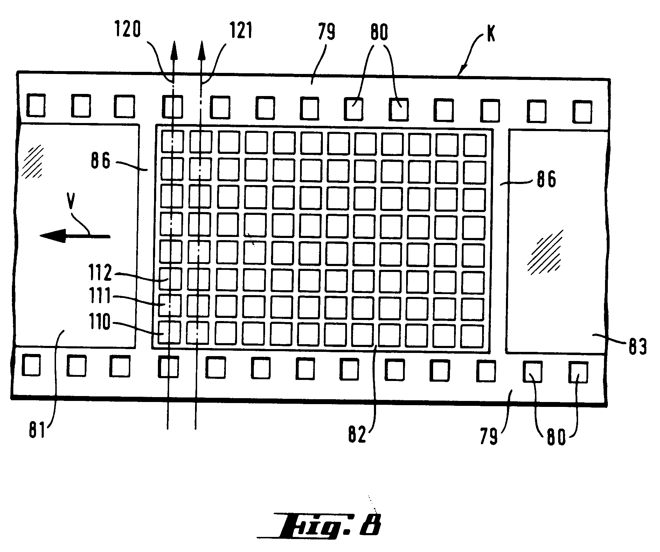

Das von der Messlichtquelle 60 kommende divergente Strahlenbündel wird nach Passieren des Wärmeschutzfilters 61 von der Kondensorlinse 62 parallelisiert. Dieses parallelisierte Strahlenbündel 63 trifft auf die obere Blende 65 und kann diese nur durch den, im Unterschied zum Ausführungsbeispiel gemäss Fig. 2, nicht gekrümmten Schlitz 66 durchdringen. Der vom Schlitz 66 ausgeblendete Teil des Strahlenbündels wird von der Zylinderlinse 67 in ihre Brennlinie 77, die ja in der Ebene der Kopiervorlage K in Richtung einer abzutastenden Zeile liegt, gebündelt. Nur im Schnittpunkt der spiralförmigen Oeffnung 78 der Scheibe 72 mit dem Strahlengang der Zylinderlinse 67 gelangt das Licht auf die Kopiervorlage K. Dieser Punkt ist der jeweils aktuelle Messpunkt 57. Der spiralförmige Schlitz der Scheibe 72 ist dabei so gekrümmt, dass der Abtastlichtpunkt 57 sich mit konstanter Geschwindigkeit längs einer Zeile über die Kopiervorlage K bewegt. Es entsteht ein Abtastmuster auf der Vorlage K, wie es in Fig. 8 gezeigt und weiter unten beschrieben ist.

Das von dem Messpunkt 57 kommende Strahlenbündel (die Randstrahlen 68-71 sind repäsentativ dafür strichliert angedeutet) wird von der zweiten Zylinderlinse 73, deren Brennlinie mit der Brennlinie 77 der oberen Zylinderlinse 67 zusammenfällt, wieder parallelisiert. Es trifft nach Passieren einer weiteren geraden Schlitzblende 74, deren Schlitzbreite etwa der Breite der Zylinderlinse 73 und deren Schlitzlänge etwa gleich der Länge der Zylinderlinse 73 und damit etwa gleich der Breite der Kopiervorlage K ist, durch eine Kondensorlinse 76 hindurch auf eine Empfangs- und Detektionseinheit. Diese kann zum Beispiel so ausgeführt sein, wie sie weiter oben anhand der Fig. 2 beschrieben ist. Als weitere Ausführungsvariante können die Zylinderlinsen 67 und 73, wie in Fig. 4 strichliert durch die Linien 58 und 59 dargestellt, auch direkt im Schlitz 66 bzw. 75 angeordnet sein.

Fig. 8 zeigt das bei der Abtastung einer Vorlage K mit dem Abtaster gemäss Fig. 6 entstehende Abtastschema. Beim Abtasten der Vorlage entsteht ein Messpunkt auf dem Filmstreifen immer dort, wo die spiralförmige Oeffnung 78 der Scheibe 72 den Strahlengang 68 bzw. 69 des von der Zylinderlinse 67 kommenden Lichts schneidet. Die Auflösung in diskrete Messpunkte 110, 111, 112 usw. erfolgt dabei durch elektronisches Sampeln. Der Messpunkt bewegt sich längs nahezu geraden Zeilen 120, 121 usw. etwa senkrecht zur Vorschubrichtung V des Filmstreifens. Die Abweichung von der "optimalen Geometrie" entsteht durch den kontinuierlichen Transport der Vorlage in Vorschubrichtung V. Allerdings ist diese Abweichung gering, da die Geschwindigkeit des Abtastens einer Zeile sehr gross gegenüber der Transportgeschwindigkeit des Filmstreifens ist. Die hohe Geschwindigkeit des Abtastens einer Zeile erfordert eine hohe Drehzahl der Scheibe 72. Diese hohe Drehzahl wird dadurch herabgesetzt, dass insgesamt vier spiralförmige Oeffnungen 78, 78a, 78b, 78c, jeweils eine auf einem 90°-Segment der Scheibe, in gleicher Weise angeordnet sind. Die Anzahl der spiralförmigen Oeffnungen entspricht dabei der Vervielfachung der Abtastfrequenz im Vergleich zu einer Scheibe mit nur einer spiralförmigen Oeffnung. Die Form der spiralförmigen Oeffnung 78, 78a, usw. hat dabei einen Einfluss auf die Abmessungen des Messpunktes. Schneidet die Oeffnung 78, 78a, usw. nämlich den Strahlengang 68 bzw. 69 des von der Zylinderlinse 67 kommenden Lichts möglichst senkrecht, so entstehen nahezu quadratische Messpunkte, deren Abmessungen kleiner sind, als wenn der Strahlengang schiefwinkelig geschnitten würde. Das auf diese Weise entstehende Abtastschema ist durch die Quadrate 110, 111, 112 usw. angedeutet.

Wie bereits erwähnt, eignen sich die beschriebenen Abtaster, die eben den Vorteil einer hohen Auflösung bei gleichzeitig sicherer Detektion aufweisen, besonders für den Einsatz in Kopiervorrichtungen. Selbstverständlich sind sie aber auch für andere Einsatzzwecke geeignet, bei denen die Vorlage kein entwickelter photographischer Negativ- oder Positivfilmstreifen ist.

## Patentansprüche

1. Photoelektrischer Abtaster, bei dem eine mit Abtastlicht beaufschlagte abzutastende Vorlage (K) mittels mindestens einer motorisch antreibbaren mechanischen Blendenvorrichtung (13, 18) zeilenweise abgetastet wird, wobei die Blendenvorrichtung (13, 18) mindestens ein zeilenweise über die abzutastende Vorlage geführtes Blendenloch sowie eine erste Lichtsammeloptik (14) aufweist, deren Focus (17) nahe bei oder in der Ebene der Vorlage (K) liegt, **dadurch gekennzeichnet, daß** die Blendenvorrichtung (13, 18) mindestens ein zweites Blendenloch sowie eine zweite Lichtsammeloptik (19) aufweist, wobei die erste Lichtsammeloptik (14) im Lichtweg vor der Vorlage (K) und die zweite Lichtsammeloptik (19) im Lichtweg nach der Vorlage (K) fluchtend mit der ersten Lichtsammeloptik (14) angeordnet ist, wobei der Focus der zweiten Lichtsammeloptik (19) mit dem Focus der ersten Lichtsammeloptik zumindest angenähert zusammenfällt, die beiden Lichtsammeloptiken (14, 19) direkt in den jeweiligen Blendenlöchern angeordnet sind und sich auf parallelen Bahnen synchron bewegen.

2. Abtaster gemäss Anspruch 1, dadurch gekennzeichnet, dass die beiden Lichtsammeloptiken (14, 19) mechanisch miteinander gekoppelt sind.

3. Abtaster gemäss Anspruch 2, dadurch gekennzeichnet, dass die Lichtsammeloptiken (14, 19) am oder nahe dem Umfang von kreisförmigen, um ihr Zentrum rotierenden Scheiben (13 bzw. 18) angeordnet sind, wobei die eine Scheibe (13) oberhalb und die andere Scheibe (18) synchron zu dieser Scheibe (13) unterhalb der Ebene der Vorlage (K) parallel zu dieser Ebene rotiert.

4. Photoelektrischer Abtaster, bei dem eine mit Abtastlicht beaufschlagte abzutastende Vorlage (K) mittels einer motorisch antreibbaren mechanischen Blendenvorrichtung zeilenweise abgetastet wird, wobei die Blendenvorrichtung eine erste ortsfeste Schlitzblende (65), eine periodisch über die abzutastende Vorlage geführte Schlitzblende (72) sowie eine erste Lichtsammeloptik (67) aufweist, deren Focus (77) nahe bei oder in der Ebene der Vorlage (K) liegt, **dadurch gekennzeichnet, daß** eine zweite ortsfeste Schlitzblende (74) und eine zweite Lichtsammeloptik (73) vorgesehen sind, wobei beide Lichtsammeloptiken (67, 73) zylindrisch sind und sich ortsfest in Zeilenrichtung über die Ebene der abzutastenden Vorlage (K) erstrecken, wobei die erste Schlitzblende (65) und die erste Lichtsammeloptik (67) im Lichtweg vor der Vorlage (K), die zweite Schlitzblende (74) und die zweite Lichtsammeloptik (73) im Lichtweg nach der Vorlage (K) angeordnet sind, und dass die motorisch antreibbare Schlitzblende (72) zwischen der ersten Lichtsammeloptik (67) und der abzutastenden Vorlage (K) angeordnet ist und sich nahe der Vorlage (K) periodisch im Strahlengang (68) der ersten Lichtsammeloptik (67) bewegt und diesen Strahlengang kreuzend einen in Zeilenrichtung laufenden Abtastlichtpunkt erzeugt.

5. Abtaster gemäss Anspruch 4, dadurch gekennzeichnet, dass die motorisch antreibbare Schlitzblende durch eine um ihr Zentrum rotierende Scheibe (72) gebildet ist, wobei der Schlitz (78) jeweils im wesentlichen etwa radial verläuft.

6. Abtaster gemäss Anspruch 5, gekennzeichnet, dass das Zentrum der rotierenden Scheibe auf der senkrecht zur Richtung der Abtastzeilen laufenden Mittellinie der Vorlage (K) liegt.

7. Abtaster gemäss Anspruch 5 oder 6, dadurch gekennzeichnet, dass jeder Schlitz (78) der rotierenden Scheibe (72) spiralförmig etwa von der Mitte der Scheibe zu deren Rand verläuft, und dass die Krümmung jedes Schlitzes so ist, dass die Geschwindigkeit des Schnittpunktes (57) des spiralförmigen Schlitzes (78) mit dem Strahlengang (68) der zylindrischen Lichtsammeloptik (67) nahezu konstant ist, sodass der durch den Schlitz (78) freigegebene Lichtpunkt sich in der Ebene der Kopiervorlage (K) mit nahezu konstanter Geschwindigkeit bewegt.

8. Abtaster gemäss einem der Ansprüche 6 oder 7, dadurch gekennzeichnet, dass die Schlitzbreite der ortsfesten Schlitzblenden (65, 74) etwa der Breite und die Schlitzlänge etwa der Länge der jeweiligen zylindrischen Sammeloptik (67, 73) entspricht, oder dass die jeweilige zylindrische Sammeloptik (67, 73) direkt im jeweiligen Blendenschlitz (66, 75) angeordnet ist.

9. Vorrichtung zum Kopieren photographischer Kopiervorlagen (K), mit einer Kopierlichtquelle (1), einem Satz servogesteuerter Farbverschlüsse (2), einer Abbildungsoptik (3), einer elektronischen Belichtungssteuerung (5) und einem der Kopierbelichtungsstation vorgeschalteten und mit Sensoren versehenen photoelektrischen Abtaster (4), wobei die Abbildungsoptik (3) die mit von der Kopierlichtquelle (1) kommendem Licht beaufschlagte Vorlage (K) auf lichtempfindliches Kopiermaterial (P) abbildet und die Farbverschlüsse und damit die Kopierlichtmengen für die einzelnen Teilbelichtungen von der Belichtungssteuerung (5) aufgrund der von den Sensoren des photoelektrischen Abtasters (4) gelieferten Signale gesteuert sind, gekennzeichnet durch einen Abtaster (4) gemäss einem der Ansprüche 1-8.

## Claims

1. A photoelectric scanner with which a master (K) which is to be scanned and upon which scanning light falls is scanned line by line by means of at least one motor-driven mechanical diaphragm device (13, 18), the diaphragm device (13, 18) having at least one diaphragm orifice which is passed line by line over the master to be scanned and having a first light collecting lens (14), the focus (17) of which is located near or in the plane of the master (K), wherein the diaphragm device (13, 18) has at least one second diaphragm orifice and a second light collecting lens (19), the first light collecting lens (14) being arranged in the light path upstream of the master (K) and the second light collecting lens (19) being arranged in the light path downstream of the master (K) in alignment with the first light collecting lens (14), the focus of the second light collecting lens (19) coinciding at least approximately with the focus of the first light collecting lens, the two light collecting lenses (14, 19) being arranged directly in the respective diaphragm orifices and moving synchronously on parallel paths.

2. A scanner according to claim 1, wherein the two light collecting lenses (14, 19) are coupled to one another mechanically.

3. A scanner according to claim 2, wherein the light collecting lenses (14, 19) are disposed on or near the periphery of circular disks (13 and 18, respectively) rotating about their centres, one disk (13) rotating above and the other disk (18) rotating, synchronously with that disk (13), below the plane of the master (K), both circular disks rotating parallel to that plane.

4. A photoelectric scanner with which a master (K) which is to be scanned and upon which scanning light falls is scanned line by line by means of a motor-driven mechanical diaphragm device, the diaphragm device having a first stationary slit diaphragm (65), a slit diaphragm (72) which is passed periodically over the master to be scanned, and a first light collecting lens (67), the focus (77) of which is located near or in the plane of the master (K), wherein a second stationary slit diaphragm (74) and a second light collecting lens (73) are provided, both light collecting lenses (67, 73) being cylindrical and extending in stationary manner in the direction of the lines over the plane of the master (K) to be scanned, the first slit diaphragm (65) and the first light collecting lens (67) being arranged in the light path upstream of the master (K) and the second slit diaphragm (74) and the second light collecting lens (73) being arranged in the light path downstream of the master (K), and the motor-driven slit diaphragm (72) is arranged between the first light collecting lens (67) and the master (K) to be scanned and moves periodically near the master (K) in the beam path (68) of the first light collecting lens (67) and, by crossing that beam path, produces a scanning light point running in the direction of the lines.

5. A scanner according to claim 4, wherein the motor-driven slit diaphragm is formed by a disk (72) rotating about its centre, each slit (78) extending substantially approximately radially.

6. A scanner according to claim 5, wherein the centre of the rotating disk lies on the centre line of the master (K), which line extends perpendicularly to the direction of the scanning lines.

7. A scanner according to claim 5 or claim 6, wherein each slit (78) of the rotating disk (72) extends helically from approximately the centre of the disk to its edge, and the curvature of each slit is such that the speed of the intersection (57) of the helical slit (78) with the beam path (68) of the cylindrical light collecting lens (67) is virtually constant so that the point of light escaping through the slit (78) moves in the plane of the copying master (K) at a virtually constant speed.

8. A scanner according to either claim 6 or claim 7, wherein the slit width of the stationary slit diaphragms (65, 74) corresponds approximately to the width, and the slit length corresponds approximately to the length, of the respective cylindrical collecting lens (67, 73), or the cylindrical collecting lens (67, 73) is located directly in the respective diaphragm slit (66, 75).

9. An apparatus for copying photographic copying masters (K), comprising a source of copying light (1), a set of servo-controlled colour shutters (2), an imaging lens (3), an electronic exposure control (5) and a photoelectric scanner (4) which is arranged upstream of the copying exposure station and is provided with sensors, in the case of which apparatus the imaging lens (3) images the master (K) upon which falls the light coming from the source of copying light (1) onto photosensitive copying material (P), and the colour shutters and thus the quantities of copying light for the individual partial exposures are controlled by the exposure control (5) according to the signals supplied by the sensors of the photoelectric scanner (4), wherein the scanner is a scanner (4) according to any one of claims 1 to 8.

## Revendications

1. Analyseur photoélectrique, dans lequel un document (K) à explorer, auquel est appliquée une lumière d'exploration, est exploré ligne par ligne au moyen d'au moins un dispositif de diaphragme mécanique (13, 18) mû par moteur, le dispositif de diaphragme (13, 18) présentant au moins un orifice de diaphragme animé d'un mouvement de balayage, ligne par ligne, sur le document à explorer, ainsi qu'une première optique de convergence de lumière (14) dont le foyer (17) est situé à proximité ou dans le plan du document (K), caractérisé en ce que le dispositif de diaphragme (13, 18) présente au moins un deuxième orifice de diaphragme ainsi qu'une deuxième optique de convergence de lumière (19), la première optique de convergence (14) étant disposée devant le document (K) dans le trajet de la lumière et la deuxième optique de convergence (19) étant disposée après le document (K) dans le trajet de la lumière, en alignement avec la première optique de convergence (14), le foyer de la deuxième optique de convergence (19) coïncidant au moins approximativement avec le foyer de la première optique de convergence et les deux optiques de convergence de lumière (14, 19) étant disposées directement dans les orifices de diaphragme coordonnés et se déplaçant en synchronisme suivant des trajectoires parallèles.

2. Analyseur selon la revendication 1, caractérisé en ce que les deux optiques de convergence de lumière (14, 19) sont accouplées mécaniquement entre elles.

3. Analyseur selon la revendication 2, caractérisé en ce que les optiques de convergence de lumière (14, 19) sont disposées sur ou à proximité du pourtour de disques (13 ou 18) de forme circulaire, tournant autour de leur centre, un disque (13) tournant au-dessus et l'autre disque (18) tournant en synchronisme avec ce disque (13) au-dessous du plan du document (K), parallèlement à ce plan.

4. Analyseur photoélectrique, dans lequel un document (K) à explorer, auquel est appliquée une lumière d'exploration, est exploré ligne par ligne au moyen d'un dispositif de diaphragme mécanique mû par moteur, le dispositif de diaphragme comportant un premier diaphragme à fente (65) stationnaire, un diaphragme à fente (72) animé d'un mouvement de balayage sur le document à explorer, ainsi qu'une première optique de convergence de lumière (67) dont le foyer (77) est situé à proximité ou dans le plan du document (K), caractérisé en ce qu'un deuxième diaphragme à fente stationnaire (74) et une deuxième optique de convergence de lumière (73) sont prévus, les deux optiques de convergence de lumière (67, 73) étant cylindriques et s'étendant à l'état stationnaire dans la direction des lignes sur le plan du document (K) à explorer, le premier diaphragme à fente (65) et la première optique de convergence (67) étant disposés devant le document (K) dans le trajet de la lumière, le deuxième diaphragme à fente (74) et la deuxième optique de convergence (73) étant disposés après le document (K) dans le trajet de la lumière, et en ce que le diaphragme à fente (72), mû par moteur, est placé entre la première optique de convergence (67) et le document (K) à explorer et se déplace périodiquement dans la marche des rayons (67) de la première optique de convergence (67) près du document (K), en générant, en croisant cette marche des rayons, un point lumineux d'exploration qui se déplace dans la direction des lignes.

5. Analyseur selon la revendication 4, caractérisé en ce que le diaphragme à fente, mû par moteur, est constitué par un disque (72) tournant autour de son centre, la fente (78) étant orientée pour l'essentiel à peu près radialement.

6. Analyseur selon la revendication 5, caractérisé en ce que le centre du disque tournant est situé sur l'axe du document (K), orienté à angle droit par rapport à la direction des lignes d'exploration.

7. Analyseur selon la revendication 5 ou 6, caractérisé en ce que chaque fente (78) du disque tournant (72) s'étend en forme de volute à peu près depuis le milieu du disque vers son bord, et en ce que la courbure de chaque fente est telle que la vitesse du point d'intersection (57) de la fente en volute (78) et de la marche des rayons (68) de l'optique de convergence cylindrique (67) soit à peu près constante, de sorte que le point lumineux découvert par la fente (78) se déplace à une vitesse presque constante dans le plan du document à copier (K).

8. Analyseur selon la revendication 6 ou 7, caractérisé en ce que la largeur de la fente du diaphragme à fente stationnaire (65, 74) correspond à peu près à la largeur de l'optique de convergence cylindrique (67, 73) coordonnée et la longueur de cette fente correspond à peu près à la longueur de cette optique de convergence cylindrique, ou en ce que l'optique de convergence cylindrique (67, 73) coordonnée est disposée directement dans la fente (66, 75) de diaphragme associée.

9. Dispositif pour copier des originaux photographiques transparents (K), comprenant une source lumineuse de tirage (1), un jeu d'obturateurs de couleur (2) servocommandés, une optique de reproduction (3), une commande électronique d'exposition (5) et un analyseur photoélectrique (4) installé en amont du poste d'exposition pour le tirage et pourvu de capteurs, l'optique de reproduction (3) reproduisant l'original (K), auquel est appliquée la lumière venant de la source lumineuse de tirage (1), sur du matériau de tirage photosensible (P) et les obturateurs de couleur et, partant, les quantités de lumière de tirage pour les différentes expositions partielles, étant commandés par la commande d'exposition (5) sur la base des signaux fournis par les capteurs de l'analyseur photoélectrique (4), dispositif caractérisé par un analyseur (4) selon une des revendications 1 - 8.
